# EUROPEAN PATENT SPECIFICATION

(11) **EP 1 143 590 B1**
(45) Date of publication and mention of the grant of the patent: **04.03.2009**
(21) Application number: 00122354.4
(22) Date of filing: 24.10.2000
(51) Int. Cl.: H02H 7/26

(54) **Power system protection and control system**
Schutz- und Regelungssystem für Stromversorgung
Système de protection et de commande pour alimentation de puissance

(30) Priority: 24.03.2000 JP 2000083173
(43) Date of publication of application: 10.10.2001
(73) Proprietor: KABUSHIKI KAISHA TOSHIBA, Kawasaki-shi, Kanagawa 212-8572 (JP)
(72) Inventor: Hasegawa, Osamu, Fuchu-shi, Tokyo-to (JP); Hamamatsu, Koichi, Nishi-Tama-gun, Tokyo-to (JP); Tanaka, Tatsuji, Urawa-shi, Saitama-ken (JP); Hori, Masao, Ageo-shi, Saitama-ken (JP)
(74) Representative: HOFFMANN EITLE

(56) References cited:
- EP-A- 0 935 327
- DE-C- 4 230 603
- PATENT ABSTRACTS OF JAPAN vol. 1998, no. 12, 31 October 1998 (1998-10-31) & JP 10 191546 A (TOSHIBA CORP), 21 July 1998 (1998-07-21)

## Description

### BACKGROUND OF THE INVENTION

### Field of the Invention

The present invention relates to a power system protection and control system (which will hereinafter be simply referred to as a protection and control system) designed for ensuring security and capable of performing remote control and remote settling through a communication system such as LAN (Local Area Network) and WAN (Wide Area Network).

### Related Background Art

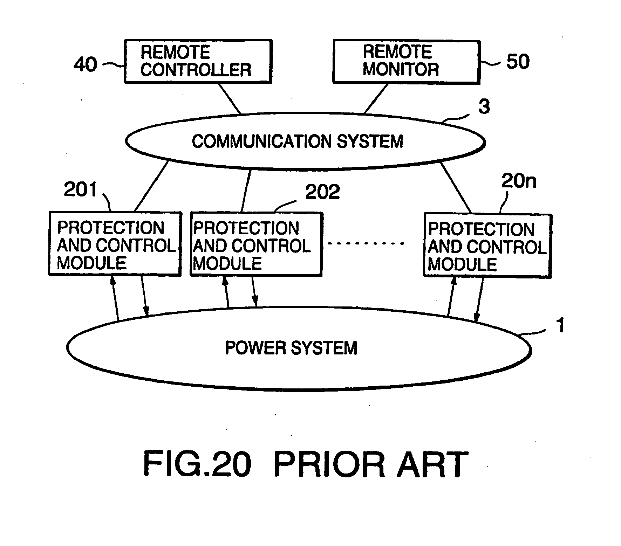

FIG. 20 is a diagram showing a basic architecture of a known power system protection and control system. Protection and control modules 201, 202, ..., 20n execute protection and control of a power system 1, and transmit pieces of data of the power system such as open/closed states of a circuit breaker, a bus voltage, a power flow of a transmission line and a frequency to a remote controller 40 and a remote monitor 50 via a communication system 3. The remote controller 40 controls the power system 1 and the remote monitor 50 monitors the same system 1 by use of the power system data received. The remote controller 40 transmits an operation command to each of the protection and control modules 201, 202, ..., 20n (which are hereinafter generically termed a protection and control device 20) via the communication system 3, thereby executing predetermined operations such as switching ON/OFF a switch, controlling a voltage of a transforming unit and changing data (e.g., a change in settling value, etc.) about the protection and control device.

Since the widespread of the Internet, an IP network (in which the data are distributed based on IP (Internet Protocol) addresses) has been applied to the communication system in many cases. An IP header of a transfer packet contains a source IP address and a destination IP address, and hence each terminal (device) connected to the communication system takes in a self-addressed packet with reference to its unique IP address, and executes processing in accordance with a content described in a data field.

When sending back the packet, a transfer packet is created and forwarded, wherein the source IP address of the packet previously taken in is set as a destination IP address while the self IP address is set as a source IP address. The IP network, more specifically, TCP/IP (Transmission Control Protocol/Internet Protocol) is applied also to the protection and control system illustrated in FIG. 20.

IP addresses, which are each unique, are allocated to the respective devices, and the data are transmitted and received based on the IP addresses. In the case of even such a protection and control system that there are provided a plurality of remote controllers 40 and/or a plurality of remote monitors 50, the devices added thereto are limited, and the remote controller 40 for issuing the operation command to the protection and control device 20 is also specified.

Accordingly, a scheme of eliminating the operation command from somewhere other than an authenticated remote controller involves checking the source IP address of the transfer packet, and a given operation command is to be executed only when a predetermined IP address is confirmed, thereby attaining an enhancement of security of the protection and control system.

According to the prior art described above, the forwarding device sets the source IP address, and therefore, if the forwarding device mistakenly sets the IP address or intentionally sets a specific IP address, the system security might be lost. For example, supposing that a device, which is not an authenticated remote controller, invades the communication system, then "pretends" to be a remote controller 40 and transmits an OFF-operation command of a certain switch to the protection and control device 20, the protection and control device receiving this command mis-recognizes it as an operation command given from the remote controller 40 and, it follows, executes the OFF-operation of the switch.

The prior art includes European patent application EP 0 935 327.

This application discloses an electric power system protection and control system, including a plurality of protection controllers and a display controller connected to each of the protection controllers via a communication network. The display controller displays and controls an operation and status of each of the protection controllers for monitoring.

### SUMMARY OF THE INVENTION

It is a primary object of the present invention, which was devised to obviate the drawbacks described above, to provide a power system protection and control system including a device capable of shutting out or immediately detecting an illicit command given from a controller other than an authenticated remote controller.

It is another object of the present invention to provide a power system protection and control system capable of detecting a mistake of the operation command by making a send-back notification of the operation content transmitted beforehand and transmitting the operation content to a third party (remote monitor), and easy to make a change to an optimal operation content with an ensured safety.

To accomplish the above objects, according to a first aspect of the present invention, a power system protection and control system comprises a protection and control device and a remote controller. The remote controller includes a unit for storing, each time the remote controller executes an operation over a protection and control device, its execution time both in the remote controller and in the protection and control device, and unit for transmitting, when the remote controller executes the operation next time, an operation command of this time, to which an operation time of the last time is added. The protection and control device includes a unit for collating a received execution time of the last time with an operation time of the last time that is stored in the protection and control device. With this contrivance, an operation command given from a fraudulent device can be eliminated by the collation with the operation time of the last time.

According to a second aspect of the present invention, In a power system protection and control system, a remote controller includes a unit for transmitting an operation content beforehand, and a unit for storing the operation content previously received. The protection and control device includes a unit for collating, when the remote controller serving as a transmitting terminal transmits the operation command to the protection and control device, the operation content transmitted together with the operation command with the previously received operation content. It is therefore feasible to eliminate the operation command given from the illicit device by the collation with the operation content transmitted beforehand.

According to the aspect defined in claim 3, even if the fraudulent device pretends to the remote controller and succeeds in transmitting the operation content beforehand, a contrivance is that a fixed period of time is taken till the operation content becomes effective, whereby the illicit operation content can be easily detected. Further, it is possible reduce by setting the old operation contents invalid such a possibility that the operation content might be illicitly used.

According to the aspect defined in claim 4, even if the fraudulent device pretends to the remote controller and succeeds in transmitting the operation content beforehand, the authenticated remote controller is capable of detecting the illicit operation before this is executed.

According to a third aspect of the present invention, in a power system protection and control system, the protection and control device includes a unit for sending, when the remote controller transmits the operation command to the protection and control device, its operation content back to the remote controller. With this construction, the operation command from the fraudulent device can be immediately detected by the sending-back to the remote controller.

According to the aspect defined in claim 7, the operation command from the fraudulent device can be eliminated by the "NG" reply from the authenticated remote controller.

According to the aspect defined in claim 8, even if the fraudulent device pretends to be the remote controller and makes the reply of "OK" of the remote controller, the operation command given from the illicit device can be eliminated by the "NG" reply from the authenticated remote controller.

According to a fourth aspect of the present invention, in a power system protection and control system, a remote controller includes a unit for previously transmitting the remote monitor of an operation content. The remote monitor includes a unit for storing the operation content received beforehand, a unit for transferring to the remote monitor the operation content transmitted to the protection and control device from the remote controller when executing the operation, and a unit for collating the operation content transferred with the operation content transmitted beforehand. With this construction, the operation command given from the fraudulent device can be eliminated by the collation with the operation content transmitted beforehand.

According to the aspect defined in claim 10, even if the fraudulent device pretends to be the remote controller and succeeds in transmitting beforehand the operation content, the illicit operation content can be easily detected by having a fixed period time taken till the operation content becomes effective. Further, a possibility of being used illicitly can be reduced by making the old operation contents invalid.

According to the aspect defined in claim 11, the operation command from the fraudulent device can be eliminated by the "NG" reply from the authenticated remote controller.

According to the aspect defined in claim 12, even if the fraudulent device pretends to be the remote monitor and makes an OK reply of the remote monitor, the operation command from the illicit device can be eliminated by the "NG" reply from the authenticated remote monitor.

According to the aspect defined in claim 13, the operation from the fraudulent device can be thereby prevented in a way of strictly checking the operation content per procedure, and a security of the protection and control system can be enhanced.

### BRIEF DESCRIPTION OF THE DRAWINGS

FIG. 1 is a diagram showing an architecture of a power system protection and control system in first through third embodiments of the present invention;
FIG. 2 is a flowchart showing a content of process of transmitting an operation command of a remote controller in the first embodiment of the present invention;
FIG. 3 is a flowchart showing a content of process of receiving a result of executing the operation of the remote controller in the first embodiment of the present invention;
FIG. 4 is a flowchart showing a content of process of receiving the operation command of a protection and control device in the first embodiment of the present invention;
FIG. 5 is a flowchart showing a content of process of transmitting beforehand the operation command of the remote controller in the second embodiment of the present invention;
FIG. 6 is a flowchart showing a content of process of a 24-hours receipt of the remote controller in the second embodiment of the present invention;
FIG. 7 is a flowchart showing a content of process of transmitting the operation command of the remote controller in the third embodiment of the present invention;
FIG. 8 is a flowchart showing a content of process of receiving a result of executing the operation of the remote controller in the second embodiment of the present invention;
FIG. 9 is a flowchart showing a content of process of receiving beforehand the operation content of the protection and control device in the second embodiment of the present invention;
FIG. 10 is a flowchart showing a content of process of a 24-hours transmission of the protection and control device in the second embodiment of the present invention;
FIG. 11 is a flowchart showing a content of process of receiving the operation command of the protection and control device in the second embodiment of the present invention;
FIG. 12 is a flowchart showing a content of process of transmitting the operation command of the remote controller in the third embodiment of the present invention;
FIG. 13 is a flowchart showing a content of process of receiving a sent-back operation content of the remote controller in the third embodiment of the present invention;
FIG. 14 is a flowchart showing a content of process of receiving the operation command of the protection and control device in the third embodiment of the present invention;
FIG. 15 is a flowchart showing a content of process of transmitting beforehand the operation content of the remote controller in a fourth embodiment of the present invention;
FIG. 16 is a flowchart showing a content of process of receiving beforehand the operation content of the remote monitor in the fourth embodiment of the present invention;
FIG. 17 is a flowchart showing a content of process of receiving a transferred operation content of the remote monitor in the fourth embodiment of the present invention;
FIG. 18 is a flowchart showing a content of process of receiving a result of executing the operation of the remote monitor in the fourth embodiment of the present invention;
FIG. 19 is a flowchart showing a content of process of receiving the operation content of the protection and control device in the fourth embodiment of the present invention; and
FIG. 20 is a diagram showing an architecture of the power system protection and control system in the fourth embodiment as well as being a hardware architecture by way of an example of the prior art.

### DETAILED DESCRIPTION OF THE PREFERRED EMBODIMENTS

### First Embodiment

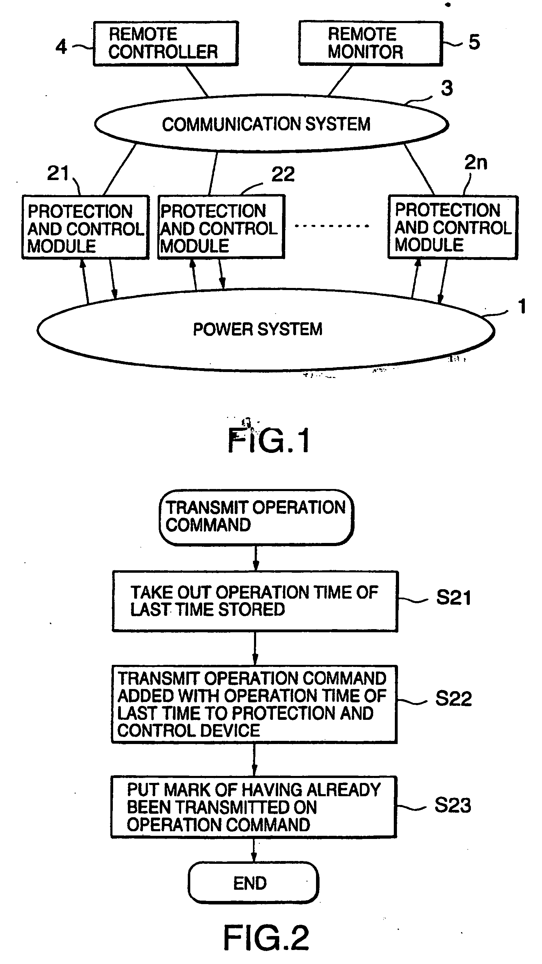

FIG. 1 is a diagram showing an architecture of a power system protection and control system in a first embodiment of the present invention. Referring to FIG. 1, protection and control modules 21, 22, ..., 2n (which are generically called a protection and control device 2) execute protection and control of a power system 1, and transmit pieces of data of the power system such as open/closed states of a circuit breaker, a bus voltage, a power flow of a transmission line and a frequency to a remote controller 4 and a remote monitor 5 via a communication system 3. The remote controller 4 and the remote monitor 4, which generate an operation command based on the power system data received, transmits these pieces of data to the protection and control device 2 via the communication system 3, and controls and monitors the power system 1. The remote controller 4 transmits operation commands for controlling (e.g., ON/OFF control) a switch within the power system 1, controlling (for, e.g., increasing/decreasing a voltage of the system) a transformer and changing data (for instance, a change in settling value, etc.) of the protection and control device.

What is characteristic of this system is a contrivance that the protection and control device 2 stores an operation time (an operation command executing time) of the last time, collates this with an operation time of the last time which is contained in the operation command issued this time from the remote controller 4, and executes the operation command only when coincident with each other. Accordingly, as a characteristic point in terms of the architecture, the remote controller 4 has a function of storing an operation command transmission time as an operation time and adding the operation time data of the last time when transmitting the operation command, and the protection and control device 2 has a function of storing an operation executing time as an operation time when executing the operation, then collating the operation time data of the last time which is contained in the operation command received this time with the operation time of the last time which is stored in the device 2 itself, and executing the operation command transmitted from the remote controller 4 only when coincident with each other.

Next, an operation of the first embodiment will be explained. FIG. 2 is a flowchart showing a content of processing when the remote controller 4 issues the operation command. In step S21, the remote controller 4 fetches the operation time of the last time that has previously been stored. In step S22, the remote controller 4 transmits the operation command to the protection and control device 2 in a way of adding the thus fetched operation time to this operation command. Further in step S23, a mark of having already been transmitted is put on the operation command.

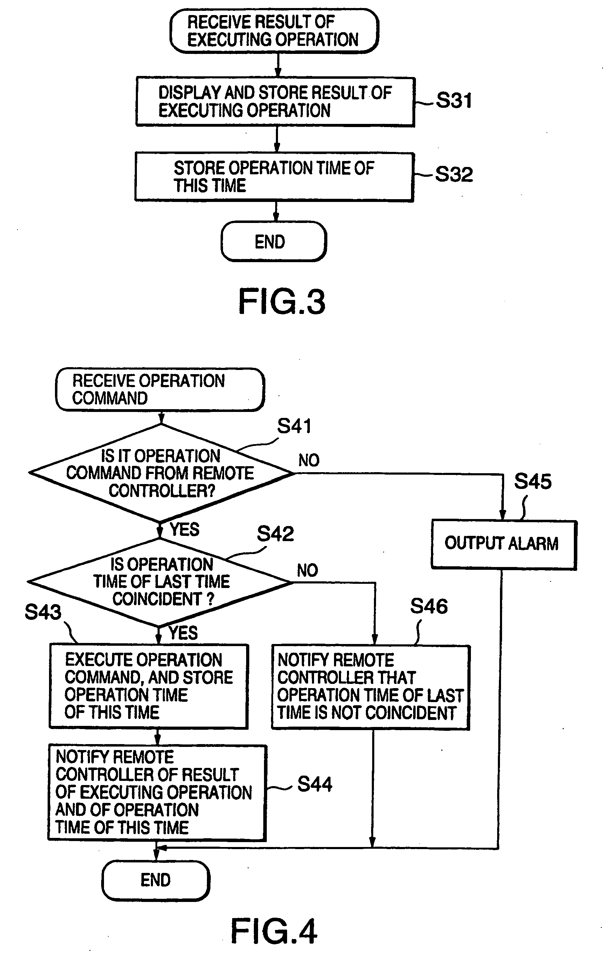

FIG. 4 is a flowchart showing a content of processing by the protection and control device 2. The protection and control device 2 checks using the source IP address in step S41 whether or not the operation command is given from the remote controller 4. In step S42, the protection and control device 2 collates the received operation time of the last time with the operation time of the last time that has been stored in the device 2 itself. When judging in step S42 that those operation times of the last time which have been stored in the controller 4 and the device 2 are coincident with each other, the protection and control device 2 executes the operation command and stores an operation time of this time. Simultaneously, the protection and control device 2 notifies the remote controller 4 of an executed result of the operation command and the operation time of this time as well in step S44.

When judging in step S41 that the command is not the operation command given from the remote controller 4, the protection and control device 2 outputs an alarm in step S45. If judging in step S42 that those two operation times of the last time are not coincident with each other, the protection and control device 2 notifies in step S46 the remote controller 4 of a purport that the operation times of the last time which have been stored in the controller 4 and the device 2 are not coincident with each other.

Next, a content of processing by the remote controller 4 when receiving a result of the operation from the protection and control device 2, will be described referring to FIG. 3. The remote controller 4 displays the received result of having executed the operation in step S31, and stores it as an operation time of this time in step S32.

According to the first embodiment, even if a third party pretends to be the remote controller 4 and intentionally operates, the third party is unable to execute the step of collating the operation times of the last time with each other. It is therefore feasible to prevent a third party's illicit operation of the protection and control device 2. Supposing that the third party becomes the remote controller 4 in disguise and is able to execute the illicit operation by setting the operation time of the last time, the authenticated remote controller 4 is also notified of a result of executing the operation, whereby the remote controller 4 can immediately detect that the fraudulent operation has been done. In this case, the false remote controller uses absolutely the same IP address as that of the authenticated remote controller 4, and it therefore follows that both of the authenticated remote controller and the false remote controller can be notified of the result of executing the operation.

In the first embodiment, the operation time of the last time is used, however, the same effect can be obtained also by use of a password as substitute for the operation time of the last time. To be specific, the protection and control device 2 transmits a one-time password to the remote controller 4 when finishing the operation, and the remote controller 4, when transmitting the operation command next time, transmits to the protection and control device 2 the operation command to which this password is added. The protection and control device 2 receiving this operation command collates it with the password transmitted last time by the device 2 itself.

In cases where the remote controller is constructed in a dual mode and where the remote controllers are installed in a plurality of places, there may be conceived a method of storing the operation time of the last time in each individual remote controller, and a method of broadcasting the operation time of the last time to all the remote controllers in common when finishing the operation.

### Second Embodiment

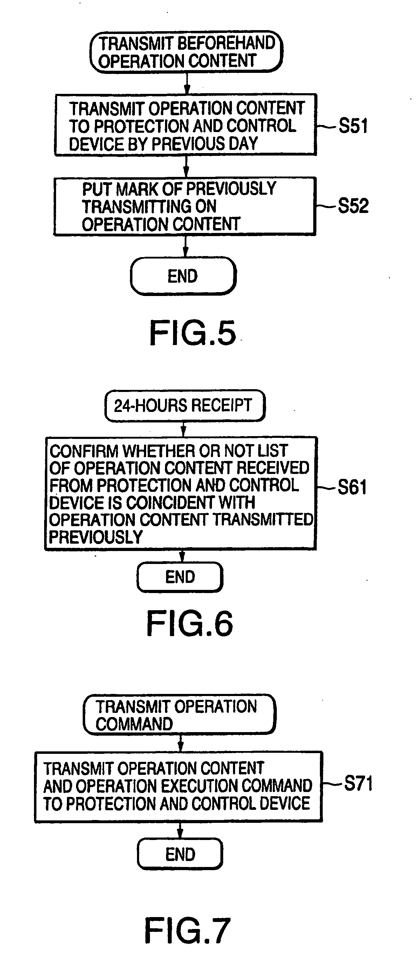

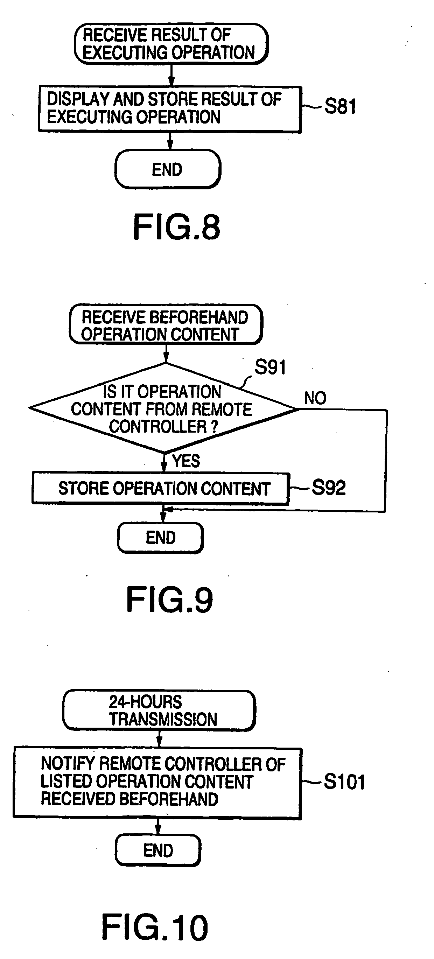

FIGS. 5 to 11 are explanatory flowcharts showing contents of processing in a second embodiment of the present invention. Note that a hardware architecture in the second embodiment is the same as that in FIG. 1, and hence its repetitive explanation is herein omitted. Then, FIGS. 5 to 8 show operations of the remote controller, and FIGS. 9 through 11 show operations of the protection and control device.

In step S51 in FIG. 5, the remote controller 4 transmits a content of the operation to the protection and control device 2 by a previous day. In step S91, the protection and control device 2 receiving this content confirms whether or not it is the operation content transmitted from the remote controller 4. If identical, this operation content is stored in step S92.

Further, in step S101 in FIG. 10, the protection and control device 2 notifies the remote controller 4 of the received operation content at 12:00 p.m. every day. The remote controller 4 confirms in step S61 in FIG. 6 that a scheduled operation content has previously been transmitted. Namely, it is confirmed whether or not a list of the operation content received from the protection and control device 2 is coincident with the operation content transmitted previously.

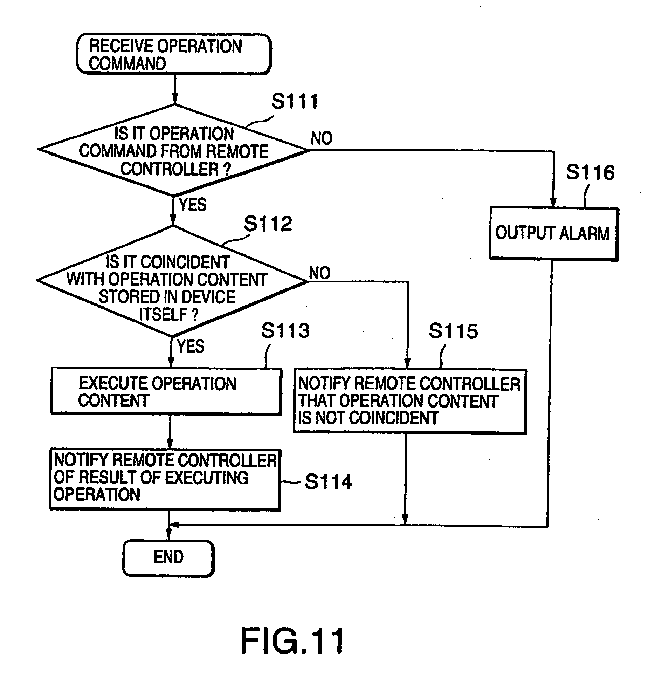

Then, in step S71 in FIG. 7, the remote controller 4 re-transmits the operation content and the operation execution command to the protection and control device 2 on the very day of executing the operation. The protection and control device 2 receiving the operation content and the operation execution command checks in step S111 in FIG. 11 by use of the source IP address whether or not it is the operation execution command issued from the remote controller. In step S112, the protection and control device 2 compares this with the operation content stored therein. On this occasion, only the operation contents stored for 12 hours (half a day) - 72 hours (three days) after having been received shall be effective. If judging in step S112 that the operation content received this time is coincident with the effective operation content, the protection and control device 2 executes the operation having that content in step S113, and notifies the remote controller 4 of a result of executing the operation command in step S114. If judged not to be coincident in step S112, in step S115 the protection and control device 2 does not execute the operation content and notifies the remote controller 4 that the operation content is not coincident. In step S81 in FIG. 8, the remote controller 4 displays and stores a received result of executing the operation. If judging in step S111 that the command is not the operation command issued from the remote controller 4, the protection and control device 2 outputs an alarm in step S116.

In accordance with the second embodiment, even if the third party in disguise pretends to be the remote controller 4 and tries to execute the operation, the protection and control device 2 is capable of preventing the illicit operation based on the operation command given from the third party by previously transmitting the operation content for collation. Further, even if the third party in disguise successfully pretends to be the remote controller 4 and is able to transmit the operation content previously, the fraudulent operation content can be detected ahead because of the notification to the remote controller 4 at 12:00 p.m. every day.

Moreover, an effective period is set in the previously-transmitted operation content, the illicit operation is easier to be detected, and the thus contrived operation content becomes harder to be used for the illicit operation. Further, the remote controller 4 is notified of the result of executing the operation, and hence, even when the fraudulent operation is conducted, the remote controller 4 is capable of detecting it promptly.

### Third Embodiment

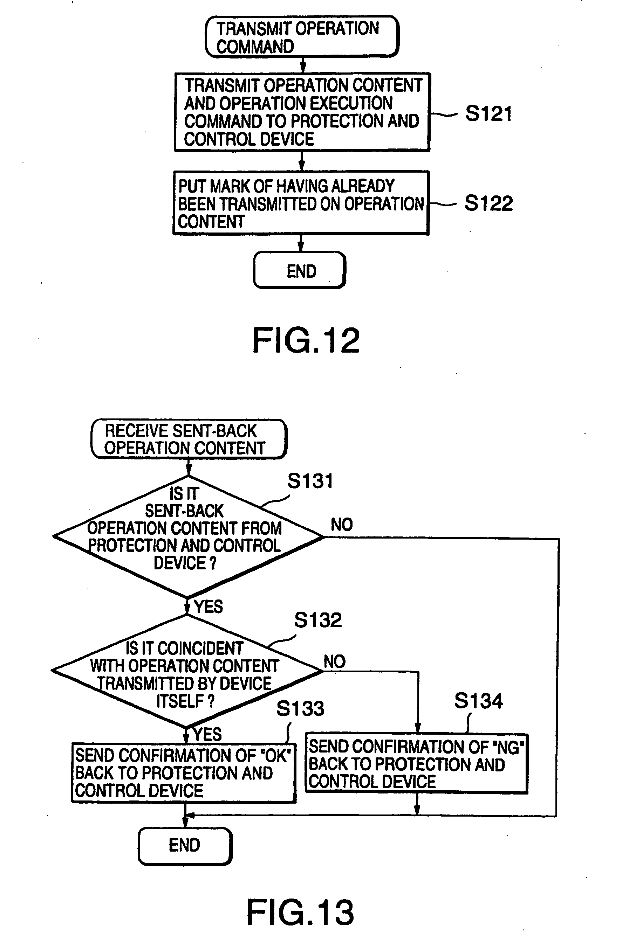

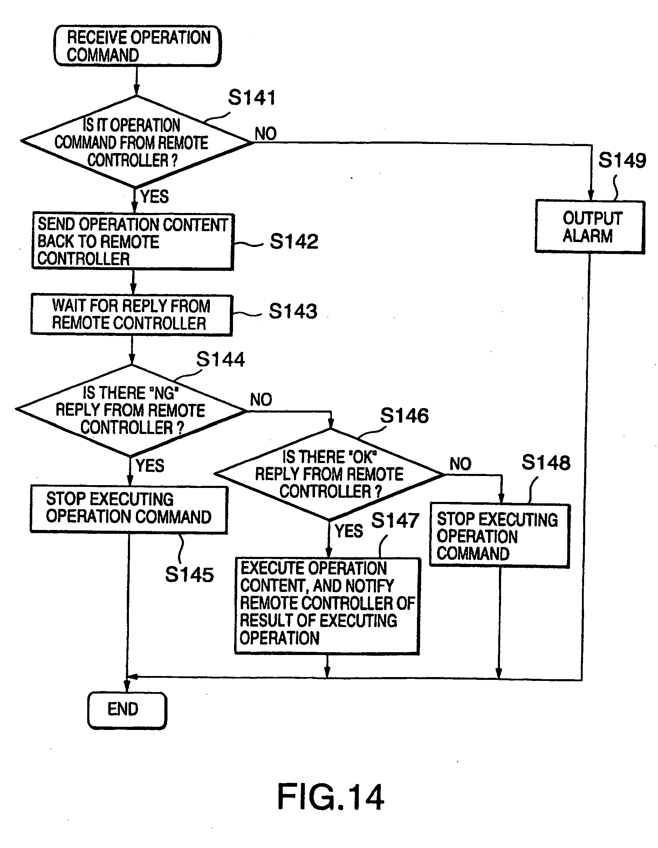

FIGS. 12 through 14 are explanatory flowcharts showing contents of processing in a third embodiment of the present invention. As in the second embodiment, a hardware architecture in third embodiment is the same as that in FIG. 1, and hence its repetitive explanation is herein omitted. Then, FIGS. 12 and 13 show operations of the remote controller, and FIG. 14 shows operations of the protection and control device.

In step S121 in FIG. 12, the remote controller 4 transmits the operation content and the operation execution command to the protection and control device 2, and puts a mark of having already been transmitted on the operation content in step S122. The protection and control device 2 receiving them checks in step S141 in FIG. 14 by use of the source IP address whether or not the command is the operation execution command issued from the remote controller 4. As a result of checking, if this is judged to be the operation execution command, the operation content thereof is sent back to the remote controller 4 defined as a forwarding terminal in step S142.

The remote controller 4 judges in step S131 in FIG. 13 whether or not a signal transmitted thereto is what the operation content is sent back from the protection and control device 2. It judged to be what is sent back, it is checked in step S132 whether or not it is coincident with the already-transmitted operation content. If coincident, a reply of "OK" is transmitted back to the protection and control device 2 in step S133. Whereas if not coincident, a reply of "NG" is transmitted back thereto in step S134.

The operation content is structured of a plurality of procedures, and hence it is checked per procedure whether or not the operation content is coincident. In step S143 in FIG. 14, the protection and control device 2, after sending the operation content back to the remote controller 4, waits for a fixed period of time (e.g., 10 seconds) and confirms a reply from the remote controller 4. When the reply of "NG" is given from the remote controller 4 in step S144, the execution of the operation command is stopped in step S145. When the reply of "NG" is not given from the remote controller 4 in step S144, it is checked in step S146 whether or not the reply of "OK" is given from the remote controller 4. If "OK" is replied, the protection and control device 2 executed the operation content and notifies the remote controller 4 of a result of executing the operation in step S147. If the reply of "OK" is not detected in step S146, the execution of the operation command is stopped in step S148. If judged not to be the operation command issued from the remote controller 4 in step S141, the alarm is outputted in step S149.

According to the third embodiment, even if the third party in disguise pretends to be the remote controller 4 and tries to execute the operation, the fraudulent operation can be previously detected by sending the operation content back to the remote controller 4. Even when the remote controller in disguise transmits the illicit operation content till the reply of "OK" with respect to the send-back is given, the reply of "NG" can be received from the authenticated remote controller after waiting for the fixed time, whereby the illicit operation by the third party in disguise can be prevented. Further, the remote controller 4 is notified of the result of executing the operation, and therefore, even if the fraudulent operation is implemented, the remote control 4 is capable of detecting it immediately.

In the third embodiment, the operation content is strictly checked per procedure, however, the same effects can be obtained also by much simpler methods, in addition to this method, in which the principal procedures and items in the operation content are coincident, and names of the operation are given to the operation content and only the names of the operations are checked in the send-back mode.

### Fourth Embodiment

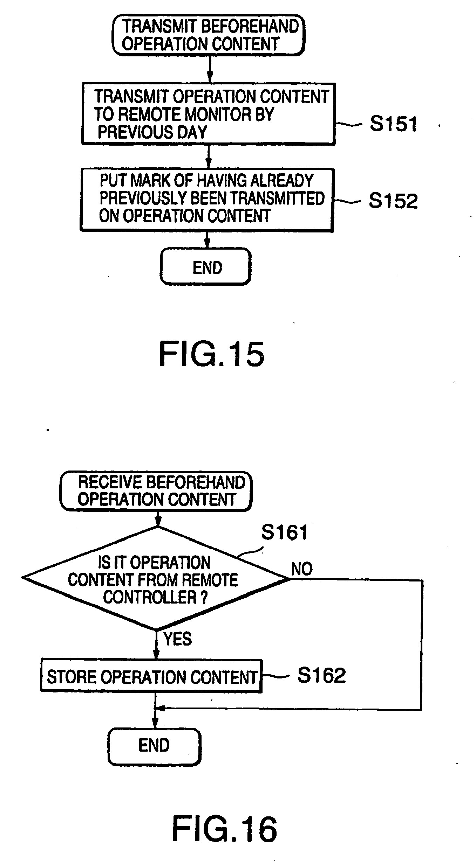

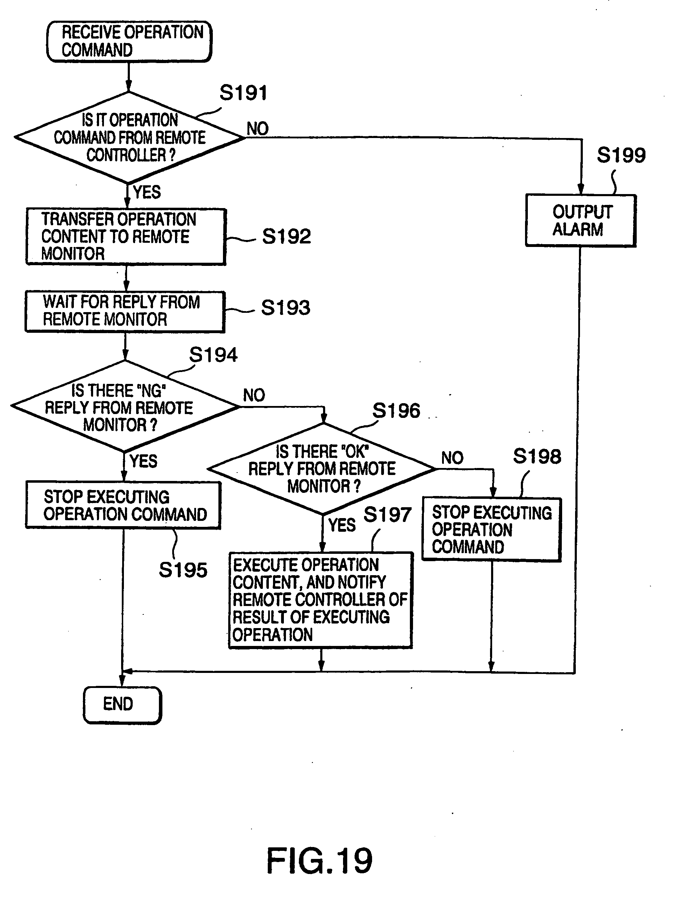

Contents of the processing in a fourth embodiment will be explained with reference to flowcharts in FIGS. 15 through 19. FIGS. 15, 17 and 18 show operations of the remote controller. FIGS. 16 and 19 show operations of the protection and control device.

In step S151 in FIG. 15, the remote controller 4 transmits the operation content to the remote monitor 5 by a previous day, and puts a mark of receiving previously on the operation content in step S152. The remote monitor 5 receiving the operation content judges in step S161 whether or not it is the operation content given from the remote controller 4. If coincident, this operation content is stored in step S162.

On the very day of executing the operation, the remote controller 4 transmits the operation content and the operation execution command to the protection and control device 2. This is the same as what has already been explained referring to FIG. 7. The protection and control device 2 receiving the operation content and the operation execution command checks using the source IP address in step S191 in FIG. 19 whether or not the command is the operation command issued from the remote controller 4, and transfers the operation content to the remote monitor 5 in step S192.

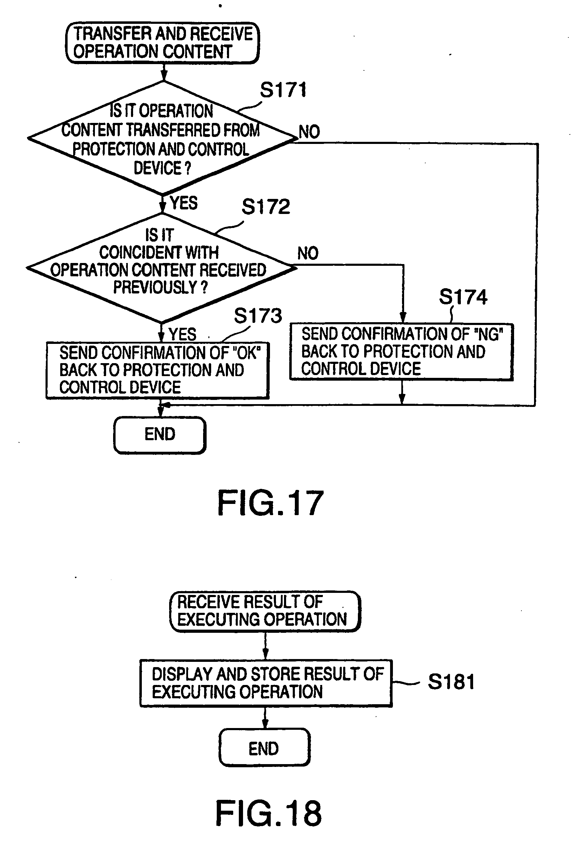

The remote monitor 5 checks in step S171 in FIG. 17 whether or not it is the transfer of the operation content to the remote monitor 5 itself from the protection and control device 2. In step S172, the remote monitor 5 checks whether or not it is coincident with the operation content that has already previously been received. If coincident, the remote monitor 5 replies "OK" in step S173. Whereas is not coincident, the remote monitor 5 replies "NG" in step S174. Further, only the previously received operation content, which has been received within 12 to 72 hours after the receipt, shall be effective. Then, the operation content is structured of the plurality of procedures, and it is therefore checked per procedure whether it is coincident or not.

The protection and control device 2, after transferring the operation content to the remote monitor 5, waits for a fixed period of time (e.g., 10 seconds), and confirms in step S194 whether or not the reply of "NG" is given from the remote monitor 5. Herein, if "NG" is replied from the remote monitor 5, the protection and control device 2 stops executing the operation command in step S195. Whereas if "NG" is not replied from the remote monitor 5 in step S194, the protection and control device 2 confirms in step S196 whether or not the reply of "OK" is given from the remote monitor 5. Herein, if "OK" is replied, the protection and control device 2 executes the operation content, and notifies the remote controller 4 of a result of executing the operation. In step S196, whereas if no reply of "OK" is given, the protection and control device 2 stops executing the operation command. That is, the protection and control device 2 executes the operation content with a limit to the case where only the "OK" reply is given from the remote monitor 5 in steps S194 and S196, and notifies the remote monitor 5 of a result of executing the operation. The remote monitor 5 displays and stores the received operation-executed result in step S181 in FIG. 18. If judged not to be the operation command issued from the remote controller 4 as a result of checking in step S191, the alarm is outputted in step S199.

According to the fourth embodiment, even if the third party in disguise pretends to be the remote controller 4 and tries to execute the operation, there is the necessity of transmitting the operation content beforehand to the remote monitor 5, and the remote monitor 5 is therefore capable of detecting the illicit operation. Since the effective period is set in the operation content that has previously been transmitted, the fraudulent operation is easier to be detected, and the thus contrived operation content becomes harder to be used for the illicit operation.

Even if the third party in disguise pretends to be the remote controller 4 and the remote monitor 5 as well at the same time and transmits the fraudulent operation content till the "OK" reply is given from the remote monitor 5, the "NG" reply is given from the authenticated remote monitor 5 after waiting for the fixed time, and hence the illicit operation can be prevented. Further, the remote monitor 5 is notified of the result of executing the operation, and therefore, even when the illicit operation is conducted, the remote monitor 5 is capable of immediately detecting it.

The discussions on the embodiments are made based on the premise that the device judges all automatically whether the operation contents are coincident with each other by the collation therebetween. It is also, however, feasible to construct the system so that the result of judgement by the device is displayed on a display unit such as a CRT, and it is judged whether the collated content is coincident or not through a confirmation of an operator.

## Claims

1. A power system protection and control system comprising:
a protection and control device (2) for protecting and controlling a power system (1); and
a remote controller (4), connected via a communication system (3) to said protection and control device (2), for remote-controlling said protection and control device (2) by issuing an operation command,
said remote controller (4) including;
storage means for storing (S32) an execution time of which said protection and control device (2) notifies each time said protection and control device (2) executes the operation command on the basis of the operation command; and
adding means for adding to the operation command, when transmitting the operation command to said protection and control device (2), an operation command execution time of the last time that has been stored in said storage means,
said protection and control device (2) including:
storage means for storing, each time the operation command given from said remote controller (4) is executed, an execution time thereof; and
collating means for judging (S42) by collation, when receiving the operation command from said remote controller (4), whether or not an operation command execution time of the last time that is contained in the operation command is coincident with an operation command execution time of the last time that is stored in said storage means.

2. A power system protection and control system comprising:
a protection and control device (2) for protecting and controlling a power system (1); and
a remote controller (4), connected via a communication system (3) to said protection and control device (2), for remote-controlling said protection and control device (2) by issuing an operation command,
said remote controller (4) including;
means for transmitting an operation content by a previous day of transmitting the operation command to said protection and control device (2);
storage means for storing the operation content transmitted to said protection and control device (2) ; and
adding means for adding to the operation command, when transmitting the operation command to said protection and control device (2), the operation content stored in said storage means,
said protection and control device (2) including:
storage means for storing (S92) the operation content transmitted by a previous day of transmitting the operation command from said remote controller (4); and
collating means for collating (S112), when receiving the operation command from said remote controller (4), the operation content transmitted together with the operation command with the operation content stored in said storage means.

3. A power system protection and control system according to claim 2, wherein said collating means sets effective only items of operation content which have been received within a fixed period of past time since the operation command was received in the operation content previously transmitted from said remote controller (4) and stored in said storage means, and uses these items of operation content for the collation.

4. A power system protection and control system according to claim 2, wherein said protection and control device (2) includes notifying means for notifying before executing the operation command said remote controller (4) of the operation content previously transmitted from said remote controller (4) and stored in said storage means.

5. A power system protection and control system according to claim 2, wherein said collating means collates (S42, S112) the operation command with the operation content for each of operation detailed procedures.

6. A power system protection and control system comprising:
a protection and control device (2) for protecting and controlling a power system (1); and
a remote controller (4), connected via a communication system (3) to said protection and control device (2), for remote-controlling said protection and control device (2) by issuing an operation command,
said protection and control device (2) including sending-back means for sending (S142), when receiving the operation command from said remote controller (4), the transmitted operation command or the operation content back to said remote controller (4),
said remote controller (4) including storage means for storing the operation command transmitted to said protection and control device (2); and
collating means for collating (S132) the operation content sent back from said protection and control device (2) with a content of the operation command stored in said storage means.

7. A power system protection and control system according to claim 6, wherein said collating means includes notifying means for notifying, when collating (S132) the operation content sent back from said protection and control device (2) with the content of the operation command stored in said storage means, said protection and control device (2) of "OK" if coincident with each other (S132, S133) and notifying said protection and control device (2) of "NG" if not coincident (S132, S134), and
said protection and control device (2), when notified of "NG", stops executing the operation command (S144, S145).

8. A power system protection and control system according to claim 6, wherein said collating means includes notifying means for notifying, when collating the operation content sent back from said protection and control device (2) with the operation command stored in said storage means, said protection and control device (2) of "OK" if coincident with each other and notifying said protection and control device of "NG" if not coincident, and
said protection and control device (2) after transferring the operation content to the remote controller (4), waits for a fixed period of time (S143), and, when notified of both of "OK" and "NG", stops executing the operation command.

9. A power system protection and control system comprising:
a protection and control device (2) for protecting and controlling a power system (1);
a remote monitor (5), connected via a communication system (3) to said protection and control device (2), for monitoring and controlling said power system (1); and
a remote controller (4), connected via the communication system (3) to said protection and control device (2), for remote-controlling said protection and control device (2) by issuing an operation command,
said remote controller (4) including notifying means for previously notifying (S151) said remote monitor (5) of an operation content by a previous day of transmitting the operation command;
said remote monitor (5) including storage means for storing the operation content of which said remote controller (4) previously notifies; and
collating means for collating the operation content transferred from said protection and control device (2) with the operation content stored in said storage means,
said protection and control device (2) including transferring means for transferring, when receiving the operation command from said remote controller (4), the operation content thereof to said remote monitor (5).

10. A power system protection and control system according to claim 9, wherein said collating means sets effective only items of operation content which have been received within a fixed period of past time since the operation content transferred from said protection and control device (2) was received in the operation content, of which said remote controller previously notifies, stored in said storage means, and uses these items of operation content for the collation.

11. A power system protection and control system according to claim 9, wherein said collating means includes notifying means for notifying, when collating the operation content sent back from said protection and control device (2) with the operation command stored in said storage means, said protection and control device (2) of "OK" if coincident with each other (S172, S173) and notifying said protection and control device (2) of "NG" if not coincident (S172, S174), and
said protection and control device (2), when notified of "NG", stops executing the operation command (S194, S195).

12. A power system protection and control system according to claim 9, wherein said collating means includes notifying means for notifying, when collating the operation content sent back from said protection and control device (2) with the content of the operation command stored in said storage means, said protection and control device (2) of "OK" if coincident with each other (S172, S174) and notifying said protection and control device (2) of "NG" if not coincident (S172, S174), and
said protection and control device (2), after transferring the operation content to the remote monitor (5), waits for a fixed period of time (S193), and, when notified of both of "OK" and "NG", stops executing the operation command (S194, S195).

13. A power system protection and control system according to claim 9, wherein said collating means collates the operation command with the operation content for each of operation detailed procedures.

## Patentansprüche

1. Schutz- und Steuersystem für ein Stromversorgungssystem mit:
einer Schutz- und Steuervorrichtung (2) zum Schützen und Steuern eines Stromversorgungssystems (1); und
einer Fernsteuereinheit (4), die über ein Kommunikationssystem (3) mit der Schutz- und Steuervorrichtung (2) verbunden ist, zum Fernsteuern der Schutz- und Steuervorrichtung (2) mittels Ausstellen eines Betriebsbefehls,
wobei die Fernsteuereinheit (4) enthält:
eine Speicherungseinrichtung zum Speichern (S32) einer Ausführungszeit, die die Schutz- und Steuervorrichtung (2) jedes Mal meldet, wenn die Schutz- und Steuervorrichtung (2) den Betriebsbefehl ausführt, auf der Grundlage des Betriebsbefehls; und
einer Hinzufügeeinrichtung zum Hinzufügen zu dem Betriebsbefehl, beim Übertragen des Betriebsbefehls an die Schutz- und Steuervorrichtung (2), einer Betriebsbefehls-Ausführungszeit der letzten Zeit, die in der Speicherungseinrichtung gespeichert worden ist,
wobei die Schutz- und Steuervorrichtung (2) enthält:
eine Speicherungseinrichtung zum Speichern, jedes Mal wenn der von der Fernsteuereinheit (4) gegebene Betriebsbefehl ausgeführt wird, einer Ausführungszeit davon; und
eine Vergleichseinrichtung zum Beurteilen (S42) durch Vergleich, beim Empfangen des Betriebsbefehls von der Fernsteuereinheit (4), ob oder nicht eine Betriebsbefehls-Ausführungszeit der letzten Zeit, die in dem Betriebsbefehl enthalten ist, mit einer Betriebsbefehls-Ausführungszeit der letzten Zeit übereinstimmt, die in der Speicherungseinrichtung gespeichert ist.

2. Schutz- und Steuersystem für ein Stromversorgungssystem mit:
einer Schutz- und Steuervorrichtung (2) zum Schützen und Steuern eines Stromversorgungssystems (1) und
einer Fernsteuereinheit (4), die über ein Kommunikationssystem (3) mit der Schutz- und Steuervorrichtung (2) verbunden ist, zum Fernsteuern der Schutz- und Steuervorrichtung (2) mittels Ausstellen eines Betriebsbefehls,
wobei die Fernsteuereinheit (4) enthält:
eine Einrichtung zum Übertragen eines Betriebsinhalts von einem vorherigen Tag einer Übertragung des Betriebsbefehls an die Schutz- und Steuervorrichtung (2);
eine Speicherungseinrichtung zum Speichern des Betriebsinhalts, der von der Schutz- und Steuervorrichtung (2) übertragen ist; und
eine Hinzufügeeinrichtung zum Hinzufügen zu dem Betriebsbefehl, beim Übertragen des Betriebsbefehls an die Schutz- und Steuervorrichtung (2), des in der Speicherungseinrichtung gespeicherten Betriebsinhalts,
wobei die Schutz- und Steuervorrichtung (2) enthält:
eine Speicherungseinrichtung zum Speichern (S92) des Betriebsinhalts, der von einem vorherigen Tag einer Übertragung des Betriebsbefehls von der Fernsteuereinheit (4) übertragen ist; und
eine Vergleichseinrichtung zum Vergleichen (S112), beim Empfangen des Betriebsbefehls von der Fernsteuereinheit (4), des Betriebsinhalts, der zusammen mit dem Betriebsbefehl übertragen ist, mit dem in der Speicherungseinrichtung gespeicherten Betriebsinhalt.

3. Schutz- und Steuersystem für ein Stromversorgungssystem gemäß Anspruch 2, wobei die Vergleichseinrichtung nur Elemente eines Betriebsinhalts wirksam setzt, die innerhalb einer festen Periode einer vergangenen Zeit empfangen worden sind, seit der Betriebsbefehl in dem Betriebsinhalt empfangen worden war, der zuvor von der Fernsteuereinheit (4) übertragen und in der Speicherungseinrichtung gespeichert worden ist, und diese Elemente des Betriebsinhalts für den Vergleich nutzt.

4. Schutz- und Steuersystem für ein Stromversorgungssystem gemäß Anspruch 2, wobei die Schutz- und Steuervorrichtung (2) eine Meldeeinrichtung enthält zum Melden, vor Ausführen des Betriebsbefehls, des Betriebsinhalts an die Fernsteuereinheit (4), der zuvor von der Fernsteuereinheit (4) übertragen und in der Speicherungseinrichtung gespeichert worden ist.

5. Schutz- und Steuersystem für ein Stromversorgungssystem gemäß Anspruch 2, wobei die Vergleichseinrichtung den Betriebsbefehl mit dem Betriebsinhalt für jede von detaillierten Betriebsprozeduren vergleicht (S42, S112).

6. Schutz- und Steuersystem für ein Stromversorgungssystem mit:
einer Schutz- und Steuervorrichtung (2) zum Schützen und Steuern eines Stromversorgungssystems (1); und
einer Fernsteuereinheit (4), die über ein Kommunikationssystem (3) mit der Schutz- und Steuervorrichtung (2) verbunden ist, zum Fernsteuern der Schutz- und Steuervorrichtung (2) mittels Ausstellen eines Betriebsbefehls,
wobei die Schutz- und Steuervorrichtung (2) eine Rücksendeeinrichtung enthält zum Senden (S142), beim Empfangen des Betriebsbefehls von der Fernsteuereinheit (4), des übertragenen Betriebsbefehls oder des Betriebsinhalts zurück an die Fernsteuereinheit (4),
wobei die Fernsteuereinheit (4) eine Speicherungseinrichtung zum Speichern des Betriebsbefehls enthält, der von der Schutz- und Steuervorrichtung (2) übertragen ist; und
eine Vergleichseinrichtung zum Vergleichen (S132) des von der Schutz- und Steuervorrichtung (2) zurückgesendeten Betriebsinhalts mit einem Inhalt des Betriebsbefehls, der in der Speicherungseinrichtung gespeichert ist.

7. Schutz- und Steuersystem für ein Stromversorgungssystem gemäß Anspruch 6, wobei die Vergleichseinrichtung eine Meldeeinrichtung enthält zum Melden, beim Vergleichen (S132) des von der Schutz- und Steuervorrichtung (2) zurückgesendeten Betriebsinhalts mit dem Inhalt des Betriebsbefehls, der in der Speicherungseinrichtung gespeichert ist, eines "OK" an die Schutz- und Steuervorrichtung (2), wenn sie miteinander übereinstimmen (S132, S133), und zum Melden eines "NG" an die Schutz- und Steuervorrichtung (2), wenn sie nicht übereinstimmen (S132, S134), und
wobei die Schutz- und Steuervorrichtung (2) eine Ausführung des Betriebsbefehls stoppt (S144, S145), wenn ihr "NG" gemeldet wird.

8. Schutz- und Steuersystem für ein Stromversorgungssystem gemäß Anspruch 6, wobei die Vergleichseinrichtung eine Meldeeinrichtung enthält zum Melden, beim Vergleich des von der Schutz- und Steuervorrichtung (2) zurückgesendeten Betriebsinhalts mit dem in der Speicherungseinrichtung gespeicherten Betriebsbefehl, eines "OK" an die Schutz- und Steuervorrichtung, wenn sie miteinander übereinstimmen, und zum Melden eines "NG" an die Schutz- und Steuervorrichtung, wenn sie nicht übereinstimmen, und
wobei die Schutz- und Steuervorrichtung (2) nach Transferieren des Betriebsinhalts an die Fernsteuereinheit (4) für eine feste Zeitperiode (S143) wartet und das Ausführen des Betriebsbefehls stoppt, wenn ihr sowohl ein "OK" als auch ein "NG" gemeldet wird.

9. Schutz- und Steuersystem für ein Stromversorgungssystem mit:
einer Schutz- und Steuervorrichtung (2) zum Schützen und Steuern eines Stromversorgungssystems (1);
einem Fernmonitor (5), der über ein Kommunikationssystem (3) mit der Schutz- und Steuervorrichtung (2) verbunden ist, zum Überwachen und Steuern des Stromversorgungssystems (1); und
einer Fernsteuereinheit (4), die über das Kommunikationssystem (3) mit der Schutz- und Steuervorrichtung (2) verbunden ist, zum Fernsteuern der Schutz- und Steuervorrichtung (2) mittels Ausstellen eines Betriebsbefehls,
wobei die Fernsteuereinheit (4) eine Meldeeinrichtung enthält zum vorherigen Melden (S151) an den Fernmonitor (5) eines Betriebsinhalts von einem vorherigen Tag einer Übertragung des Betriebsbefehls;
wobei der Fernmonitor (5) eine Speicherungseinrichtung enthält zum Speichern des Betriebsinhalts, den die Fernsteuereinheit (4) zuvor meldet; und
eine Vergleichseinrichtung zum Vergleichen des von der Schutz- und Steuervorrichtung (2)transferierten Betriebsinhalts mit dem in der Speicherungseinrichtung gespeicherten Betriebsinhalt,
wobei die Schutz- und Steuervorrichtung (2) eine Transfereinrichtung enthält zum Transferieren, beim Empfangen des Betriebsbefehls von der Fernsteuereinheit (4), des Betriebsinhalts davon an den Fernmonitor (5).

10. Schutz- und Steuersystem für ein Stromversorgungssystem gemäß Anspruch 9, wobei die Vergleichseinrichtung nur Elemente eines Betriebsinhalts wirksam setzt, die innerhalb einer festen Periode einer vergangenen Zeit empfangen worden sind, seit der von der Schutz- und Steuervorrichtung (2) transferierte Betriebsinhalt empfangen worden ist, in dem Betriebsinhalt, den die Fernsteuereinheit zuvor meldet, in der Speicherungseinrichtung gespeichert, und diese Elemente des Betriebsinhalts für den Vergleich verwendet.

11. Schutz- und Steuersystem für ein Stromversorgungssystem gemäß Anspruch 9, wobei die Vergleichseinrichtung eine Meldeeinrichtung enthält zum Melden, beim Vergleichen des von der Schutz- und Steuervorrichtung (2) zurückgesendeten Betriebsinhalts, mit dem in der Speicherungseinrichtung gespeicherten Betriebsbefehl, eines "OK" an die Schutz- und Steuervorrichtung (2), wenn sie miteinander übereinstimmen (S172, S173), und zum Melden eines "NG" an die Schutz- und Steuervorrichtung (2), wenn sie nicht übereinstimmen (S172, S174), und
wobei die Schutz- und Steuereinrichtung (2) die Ausführung des Betriebsbefehls stoppt (S194, S195), wenn ihr ein "NG" gemeldet wird.

12. Schutz- und Steuersystem für ein Stromversorgungssystem gemäß Anspruch 9, wobei die Vergleichseinrichtung eine Meldeeinrichtung enthält zum Melden, beim Vergleichen des von der Schutz- und Steuervorrichtung (2) zurückgesendeten Betriebsinhalts mit dem Inhalt des Betriebsbefehls, der n der Speicherungseinrichtung gespeichert ist, eines "OK" an die Schutz- und Steuervorrichtung (2), wenn sie miteinander übereinstimmen (S172, S174), und zum Melden eines "NG" an die Schutz- und Steuervorrichtung (2), wenn sie nicht übereinstimmen (S172, S174), und
wobei die Schutz- und Steuervorrichtung (2) nach Transferieren des Betriebsinhalts an den Fernmonitor (5) für eine feste Zeitperiode wartet (S193) und das Ausführen des Betriebsbefehls stoppt (S194, S195), wenn ihr sowohl ein "OK" als auch ein "NG" gemeldet wird.

13. Schutz- und Steuersystem für ein Stromversorgungssystem gemäß Anspruch 9, wobei die Vergleichseinrichtung den Betriebsbefehl mit dem Betriebsinhalt für jede von detaillierten Betriebsprozeduren vergleicht.

## Revendications

1. Système de protection et de commande pour alimentation de puissance comprenant :
un dispositif (2) de protection et de commande destiné à protéger et commander un système (1) d'alimentation de puissance ; et
un dispositif (4) de commande à distance, connecté via un système de communication (3) audit dispositif (2) de protection et de commande, destiné à commander à distance ledit dispositif (2) de protection et de commande en émettant une commande d'opération,
ledit dispositif (4) de commande à distance comprenant :
un moyen de mémorisation destiné à mémoriser (S32) un temps d'exécution dont informe ledit dispositif (2) de protection et de commande chaque fois que ledit dispositif (2) de protection et de commande exécute la commande d'opération sur base de la commande d'opération ; et
un moyen d'addition destiné à ajouter à la commande d'opération, lors de la transmission de la commande d'opération vers ledit dispositif (2) de protection et de commande, un temps d'exécution de la commande d'opération du dernier temps qui a été mémorisé dans ledit moyen de mémorisation ;
ledit dispositif (2) de protection et de commande comprenant :
un moyen de mémorisation destiné à mémoriser, chaque fois que la commande d'opération donnée depuis ledit dispositif (4) de commande à distance est exécutée, un temps d'exécution de celle-ci ; et
un moyen de collationnement de données destiné à juger (S42) par collationnement, lors de la réception de la commande d'opération en provenance dudit dispositif (4) de commande à distance, si un temps d'exécution de la commande d'opération du dernier temps qui est contenu dans la commande d'opération coïncide oui ou non avec un temps d'exécution de la commande d'opération du dernier temps qui est mémorisé dans ledit moyen de mémorisation.

2. Système de protection et de commande pour alimentation de puissance comprenant :
un dispositif (2) de protection et de commande destiné à protéger et commander un système (1) d'alimentation de puissance ; et
un dispositif (4) de commande à distance, connecté via un système de communication (3) audit dispositif (2) de protection et de commande, destiné à commander à distance ledit dispositif (2) de protection et de commande en émettant une commande d'opération,
ledit dispositif (4) de commande à distance comprenant :
un moyen destiné à transmettre un contenu d'opération par un jour antérieur de transmission de la commande d'opération vers ledit dispositif (2) de protection et de commande ;
un moyen de mémorisation destiné à mémoriser le contenu d'opération transmis vers ledit dispositif (2) de protection et de commande ; et
un moyen d'addition destiné à ajouter à la commande d'opération, lors de la transmission de la commande d'opération vers ledit dispositif (2) de protection et de commande, le contenu d'opération mémorisé dans ledit moyen de mémorisation,
ledit dispositif (2) de protection et de commande comprenant :
un moyen de mémorisation destiné à mémoriser (S92) le contenu d'opération transmis par un jour antérieur de transmission de la commande d'opération depuis ledit dispositif (4) de commande à distance; et
un moyen de collationnement de données destiné à collationner (S112), lors de la réception de la commande d'opération en provenance dudit dispositif (4) de commande à distance, le contenu d'opération transmis avec la commande d'opération accompagnée du contenu d'opération mémorisé dans ledit moyen de mémorisation.

3. Système de protection et de commande pour alimentation de puissance selon la revendication 2, dans lequel ledit moyen de collationnement met des postes uniquement effectifs de contenu d'opération qui ont été reçus pendant une période fixe du temps passé depuis que la commande d'opération a été reçue dans le contenu d'opération transmis préalablement depuis ledit dispositif (4) de commande à distance et mémorisé dans ledit moyen de mémorisation, et utilise ces postes de contenu d'opération pour le collationnement.

4. Système de protection et de commande pour alimentation de puissance selon la revendication 2, dans lequel ledit dispositif (2) de protection et de commande comprend un moyen de notification destiné à informer avant l'exécution de la commande d'opération ledit dispositif (4) de commande à distance du contenu d'opération transmis préalablement depuis ledit dispositif (4) de commande à distance et mémorisé dans ledit moyen de mémorisation.

5. Système de protection et de commande pour alimentation de puissance selon la revendication 2, dans lequel ledit moyen de collationnement collationne (S42, S112) la commande d'opération avec le contenu d'opération pour chacune des procédures détaillées d'opération.

6. Système de protection et de commande pour alimentation de puissance comprenant :
un dispositif (2) de protection et de commande destiné à protéger et commander un système (1) d'alimentation de puissance ; et
un dispositif (4) de commande à distance, connecté via un système de communication (3) audit dispositif (2) de protection et de commande, destiné à commander à distance ledit dispositif (2) de protection et de commande en émettant une commande d'opération,
ledit dispositif (2) de protection et de commande comprenant un moyen de renvoi destiné à envoyer (S142), lors de la réception de la commande d'opération en provenance dudit dispositif (4) de commande à distance, la commande d'opération transmise ou le contenu d'opération par retour vers ledit dispositif (4) de commande à distance, ledit dispositif (4) de commande à distance comprenant un moyen de mémorisation destiné à mémoriser la commande d'opération transmise vers ledit dispositif (2) de protection et de commande ; et
un moyen de collationnement de données destiné à collationner (S132) le contenu d'opération renvoyé depuis ledit dispositif (2) de protection et de commande avec un contenu de la commande d'opération mémorisé dans ledit moyen de mémorisation.

7. Système de protection et de commande pour alimentation de puissance selon la revendication 6, dans lequel ledit moyen de collationnement comprend un moyen de notification destiné à informer, lors du collationnement (S132) du contenu d'opération renvoyé depuis ledit dispositif (2) de protection et de commande avec le contenu de la commande d'opération mémorisé dans ledit moyen de mémorisation, ledit dispositif (2) de protection et de commande d'un « OK » s'il y a coïncidence de l'un avec l'autre (S132, S133) et à informer ledit dispositif (2) de protection et de commande d'un « NG » s'il n'y a pas coïncidence (S132, S134), et
ledit dispositif (2) de protection et de commande, lors d'une notification d'un « NG », arrête l'exécution de la commande d'opération (S144, S145).

8. Système de protection et de commande pour alimentation de puissance selon la revendication 6, dans lequel ledit moyen de collationnement comprend un moyen de notification destiné à informer, lors du collationnement du contenu d'opération renvoyé depuis ledit dispositif (2) de protection et de commande avec la commande d'opération mémorisée dans ledit moyen de mémorisation, ledit dispositif (2) de protection et de commande d'un « OK » s'il y a coïncidence de l'un avec l'autre et à informer ledit dispositif (2) de protection et de commande d'un « NG » s'il n'y a pas coïncidence, et
ledit dispositif (2) de protection et de commande, après le transfert du contenu d'opération vers le dispositif (4) de commande à distance, attend un laps de temps fixe (S143), et, lors d'une notification à la fois d'un « OK » et d'un « NG », arrête l'exécution de la commande d'opération.

9. Système de protection et de commande pour alimentation de puissance comprenant :
un dispositif (2) de protection et de commande destiné à protéger et commander un système (1) d'alimentation de puissance ;
un dispositif (5) de surveillance à distance, connecté via un système de communication (3) audit dispositif (2) de protection et de commande, destiné à surveiller et commander ledit système (1) d'alimentation de puissance ; et
un dispositif (4) de commande à distance, connecté via le système de communication (3) audit dispositif (2) de protection et de commande, destiné à commander à distance ledit dispositif (2) de protection et de commande en émettant une commande d'opération,
ledit dispositif (4) de commande à distance comprenant un moyen de notification destiné à informer préalablement (S151) ledit dispositif (5) de surveillance à distance d'un contenu d'opération par un jour antérieur de transmission de la commande d'opération ;
ledit dispositif (5) de surveillance à distance comprenant un moyen de mémorisation destiné à mémoriser le contenu d'opération dont informe préalablement ledit dispositif (4) de commande à distance ; et
un moyen de collationnement destiné à collationner le contenu d'opération transféré depuis ledit dispositif (2) de protection et de commande avec le contenu d'opération mémorisé dans ledit moyen de mémorisation,
ledit dispositif (2) de protection et de commande comprenant un moyen de transfert destiné à transférer, lors d'une réception de la commande d'opération en provenance dudit dispositif (4) de commande à distance, le contenu d'opération de celle-ci vers ledit dispositif (5) de surveillance à distance.

10. Système de protection et de commande pour alimentation de puissance selon la revendication 9, dans lequel ledit moyen de collationnement met des postes uniquement effectifs de contenu d'opération qui ont été reçus dans une période fixe de temps passé depuis que le contenu d'opération transféré depuis ledit dispositif (2) de protection et de commande a été reçu dans le contenu d'opération, dont informe préalablement ledit dispositif de commande à distance, mémorisé dans ledit moyen de mémorisation, et utilise ces postes de contenu d'opération pour le collationnement.

11. Système de protection et de commande pour alimentation de puissance selon la revendication 9, dans lequel ledit moyen de collationnement comprend un moyen de notification destiné à informer, lors du collationnement du contenu d'opération renvoyé depuis ledit dispositif (2) de protection et de commande avec la commande d'opération mémorisée dans ledit moyen de mémorisation, ledit dispositif (2) de protection et de commande d'un « OK » s'il y a coïncidence de l'un avec l'autre (S172, S173) et à informer ledit dispositif (2) de protection et de commande d'un « NG » s'il n'y a pas coïncidence (S172, S174), et
ledit dispositif (2) de protection et de commande, lors d'une notification d'un « NG », arrête l'exécution de la commande d'opération (S194, S195).

12. Système de protection et de commande pour alimentation de puissance selon la revendication 9, dans lequel ledit moyen de collationnement comprend un moyen de notification destiné à informer, lors du collationnement du contenu d'opération renvoyé depuis ledit dispositif (2) de protection et de commande avec le contenu de la commande d'opération mémorisé dans ledit moyen de mémorisation, ledit dispositif (2) de protection et de commande d'un « OK » s'il y a coïncidence de l'un avec l'autre (S172, S174) et à informer ledit dispositif (2) de protection et de commande d'un « NG » s'il n'y a pas coïncidence (S172, S174), et
ledit dispositif (2) de protection et de commande, après le transfert du contenu d'opération vers le dispositif (5) de surveillance à distance, attend un laps de temps fixe (S193), et, lors d'une notification à la fois d'un « OK » et d'un « NG », arrête l'exécution de la commande d'opération (S194, S195).

13. Système de protection et de commande pour alimentation de puissance selon la revendication 9, dans lequel ledit moyen de collationnement collationne la commande d'opération avec le contenu d'opération pour chacune des procédures détaillées d'opération.
